(19) Europäisches Patentamt
European Patent Office
Office européen des brevets

(11) **EP 1 508 233 B1**

(12) **FASCICULE DE BREVET EUROPEEN**

(45) Date de publication et mention de la délivrance du brevet:
**26.10.2011 Bulletin 2011/43**

(21) Numéro de dépôt: **03755187.6**

(22) Date de dépôt: **22.05.2003**

(51) Int Cl.:
***H04L 27/26*** *(2006.01)*

(86) Numéro de dépôt international:
**PCT/FR2003/001555**

(87) Numéro de publication internationale:
**WO 2003/101066 (04.12.2003 Gazette 2003/49)**

(54) **PROCEDE ET DISPOSITIF DE SYNCHRONISATION A LA RECEPTION D'UN SIGNAL ET D'ECHOS**

VERFAHREN UND EINRICHTUNG ZUR SYSNCHRONISATION BEIM EMPFANG EINES SIGNALS UND VON ECHOS

METHOD AND DEVICE FOR SYNCHRONIZATION UPON RECEPTION OF A SIGNAL AND ECHOES

(84) Etats contractants désignés:
**AT BE BG CH CY CZ DE DK EE ES FI FR GB GR HU IE IT LI LU MC NL PT RO SE SI SK TR**

(30) Priorité: **24.05.2002 FR 0206389**

(43) Date de publication de la demande:
**23.02.2005 Bulletin 2005/08**

(73) Titulaire: **Dibcom**
**91120 Palaiseau (FR)**

(72) Inventeurs:
• **HAMMAN, Emmanuel**
  **F-75015 Paris (FR)**
• **DUPONT, Paul-Alexandre**
  **F-91460 Marcoussis (FR)**

(74) Mandataire: **Habasque, Etienne J. Jean-François et al**
  **Cabinet Lavoix**
  **2, place d'Estienne d'Orves**
  **75441 Paris Cedex 09 (FR)**

(56) Documents cités:
**EP-A- 1 178 642      WO-A-97/26742**
**GB-A- 2 307 155**

**Description**

La présente invention concerne un procédé et un dispositif de synchronisation à la réception d'un signal et d'échos.

De telles réceptions sont courantes notamment dans le domaine de la transmission d'un signal hertzien, tel qu'un signal de télévision numérique.

De manière classique, le signal émis comporte des séquences ou trames distinctes et la réception de ce signal requiert une étape de synchronisation.

Dans le cadre de la transmission d'informations de télévision numérique, le signal source est découpé en ensembles de données désignés « symboles » d'une durée connue.

Par exemple, dans le cadre de l'application de la transmission par voie hertzienne d'un signal modulé par multiplexage orthogonal par division en fréquences (OFDM ou COFDM), un symbole désigne un ensemble de données numériques transmis en parallèle par voie hertzienne sur des porteuses d'amplitude et de fréquence différentes.

Typiquement, un tel symbole comporte 8192 valeurs différentes et a une durée de l'ordre de la milliseconde.

Pour permettre de synchroniser la réception et d'extraire du signal reçu les symboles transmis, il est introduit, dans chaque symbole, un sous-bloc de données répété au début et à la fin du symbole afin de permettre de se synchroniser.

Par exemple, ce sous-bloc constitue une partie du début du symbole qui est répétée à la fin de celui-ci.

Un tel sous-bloc est couramment désigné intervalle de garde ou préfixe circulaire.

Le document GB 2370155A (British Broadcosting Corporation), publie le 14 mai 1997, décrit une méthode comme de synchronisation de signaux OFDM.

Par ailleurs, au niveau du récepteur, la transmission par voie hertzienne se traduit par l'existence de nombreux canaux de transmission sur lesquels transitent des signaux de transmission correspondant tous au même signal source.

L'existence d'une pluralité d'émetteurs et/ou de réflexions dues à l'environnement génère des signaux d'échos véhiculés par des canaux de transmission différents.

Ainsi, le récepteur reçoit plusieurs signaux de transmission correspondant tous au même signal source, mais modifiés et décalés dans le temps les uns par rapport aux autres.

On peut ainsi définir un premier signal de transmission et des signaux d'échos.

Certains des signaux de transmission sont trop atténués pour être exploitables et la réception de tels signaux nécessite de définir un écart temporel théorique maximum entre les signaux de transmission utilisables.

Le signal reçu correspond donc à l'addition de ces signaux de transmission utilisables.

La présence d'une pluralité de signaux nécessite cependant des procédés de synchronisation spécifiques permettant de déterminer le début des symboles, indépendamment des recouvrements entre les échos.

Les procédés et dispositifs de synchronisation existants sont basés sur des hypothèses de variations lentes et continues des canaux de transmission, de sorte que la synchronisation avec le signal reçu n'est effectuée que périodiquement, en cas de désynchronisation.

Ces hypothèses ne peuvent cependant pas s'appliquer dans le cas de modifications rapides et/ou discontinues des canaux de transmission.

Notamment, pour l'application à la réception en mobilité ou lors de la présence d'éléments mobiles à proximité des antennes de réception et induisant des réflexions variables (individus, véhicules), l'utilisation des procédés existants se traduit par de multiples ruptures de la synchronisation et donc des pertes de signal utile.

L'objectif de l'invention est de remédier à ce problème en définissant un procédé et un dispositif de synchronisation qui permettent une synchronisation en présence de signaux transmis sur des canaux de transmission variables.

La présente invention a pour objet un procédé de synchronisation à la réception d'un signal reçu obtenu par addition d'une pluralité de signaux de transmission, correspondant tous au même signal source et décalés entre eux d'écarts temporels variables, ledit signal source comportant des blocs de données désignés « symboles » d'une durée prédéterminée, chaque symbole comportant au début et à la fin un même sous-bloc de données désigné « intervalle de garde », d'une durée prédéterminée supérieure ou égale à un écart maximal théorique entre lesdits signaux de transmission, comport<u>ant</u> :

- une étape de détermination d'un signal représentatif des interférences entre les symboles de différents signaux de transmission, désignées « interférences inter-symboles » ;
- une étape de détermination d'un instant de niveau d'interférences minimum périodiquement pour des intervalles de temps d'une durée égale à ladite durée de symbole, lesquels instants correspondent à des repères de début de symboles ; et
- une étape de synchronisation, à partir desdits repères de début de symboles et de ladite durée de symbole, de la réception dudit signal reçu ;

- ledit signal reçu comporte une pluralité d'informations connues de référence, désignées « pilotes » et ladite étape de détermination d'un signal représentatif des interférences inter-symboles comporte :
  - une sous-étape de transformation dudit signal reçu, d'une base temporelle vers une base fréquentielle sur une fenêtre temporelle d'une durée égale à ladite durée de symbole ;
  - une sous-étape d'extraction desdits pilotes ;
  - une sous-étape de calcul des valeurs de la fonction d'autocorrélation des pilotes afin de délivrer un signal d'autocorrélation des pilotes ;
  - une sous-étape de transformation dudit signal d'autocorrélation des pilotes d'une base fréquentielle vers une base temporelle afin de déterminer un signal représentatif du profil des échos et correspondant à la répartition de l'énergie cumulée des signaux de transmission dans ladite fenêtre temporelle ; et
  - une sous-étape de calcul des valeurs de la fonction de convolution entre le signal de profil des échos et un signal de référence pour obtenir directement ledit signal représentatif des interférences inter-symboles.

Suivant d'autres caractéristiques :

- ladite étape de détermination périodique d'instants de niveau d'interférences minimum comporte :

  - une sous-étape de détermination de l'instant auquel le signal d'interférences inter-symboles atteint un niveau minimum sur un premier intervalle de temps d'une durée égale à la durée de symbole ; et
  - une sous-étape de détermination récursive des instants auxquels le signal d'interférences inter-symboles atteint un niveau minimum sur des intervalles de temps d'une durée égale à la durée de symbole qui débutent un temps prédéterminé après l'instant de niveau d'interférences minimum précédent ;

- ledit temps prédéterminé correspond à une demi-durée de symbole, additionné à un nombre entier de durées de symbole ;
- ladite étape de synchronisation correspond à l'extraction des données du signal reçu pendant des intervalles de traitement d'une durée prédéterminée dont l'instant de début est fixé par rapport auxdits repères de début de symbole ;
- il comporte après ladite étape de détermination d'instants de niveau d'interférences minimum, une étape de détermination de l'écart entre la durée de l'intervalle séparant deux instants de niveau d'interférences minimum consécutifs et ladite durée de symbole, afin de délivrer une mesure de variation de synchronisation ;
- il comporte, suite à ladite étape de détermination d'une variation de la synchronisation, une étape de compensation de cette variation ;
- il comporte après ladite étape de synchronisation, une étape de transformation du signal reçu synchronisé d'une base temporelle vers une base fréquentielle ;
- ladite étape de compensation correspond à une étape de rotation de phase de manière à effectuer une permutation circulaire à l'intérieur de chaque symbole d'une quantité de données correspondant à ladite variation de synchronisation ;
- ledit signal source est un signal multiporteuse de télévision numérique transmis par voie hertzienne modulé par multiplexage orthogonal par division de fréquence ;
- il est mis en oeuvre de manière non continue ; et
- il est mis en oeuvre en continu et ladite étape de détermination d'instants de niveau d'interférences minimum est réalisée pour chaque intervalle de temps d'une durée égale à ladite durée de symbole.

L'invention porte également sur un programme d'ordinateur qui comporte des instructions de code de programme, pour l'exécution des étapes du procédé tel que décrit précédemment, lorsque ledit programme est exécuté sur un ordinateur.

L'invention porte également sur un composant programmé qui comprend une configuration logique dédiée à l'exécution des étapes du procédé tel que décrit précédemment.

L'invention porte également sur un dispositif de synchronisation à la réception d'un signal reçu obtenu par addition d'une pluralité de signaux de transmission, correspondant tous au même signal source et décalés entre eux d'écarts temporels variables, ledit signal source comportant des blocs de données désignés « symboles » d'une durée prédéterminée, chaque symbole comportant au début et à la fin un même sous-bloc de données désigné « intervalle de garde », d'une durée prédéterminée supérieure ou égale à un écart maximal théorique entre lesdits signaux de transmission, le dispositif compostant :

- un module de calcul d'un signal représentatif des interférences entre les symboles des différents signaux de transmission, désignés « interférences inter-symboles » ; et
- un module de détermination d'un repère de début de symbole pour chaque intervalle de temps d'une durée égale à ladite durée de symbole, par rapport aux instants auxquels le signal d'interférences inter-symboles atteint un niveau minimum afin de délivrer un signal de synchronisation permettant une synchronisation-;
le dispositif étant **caractérisé en ce que** ledit signal reçu comporte une pluralité d'informations connues de référence, désignées « pilotes » et en ce que le dispositif comprend en outre :
- un module de transformation d'une base temporelle vers une base fréquentielle, recevant en entrée ledit signal reçu et ledit signal de synchronisation afin de transformer ledit signal reçu pendant des intervalles de traitement d'une durée prédéterminée dont l'instant de début est déterminé par rapport auxdits repères de début de symbole contenus dans ledit signal de synchronisation ;
- un module d'extraction desdits pilotes :
- un module de calcul des valeurs de la fonction d'autocorrélation des pilotes afin de délivrer un signal d'autocorrélation des pilotes :
- un module de transformation dudit signal d'autocorrélation des pilotes d'une base fréquentielle vers une base temporelle afin de déterminer un signal représentatif du profil des échos et correspondant à la répartition de l'énergie cumulée des signaux de transmission dans ladite fenêtre temporelle : et
- un module de calcul des valeurs de la fonction de convolution entrele signal de profil des échos et un signal de référence pour obtenir directement ledit signal représentatif des interférences inter-svmboles.

Selon d'autres caractéristiques du dispositif de l'invention :

- il comprend en outre un module de détermination d'une valeur de variation de synchronisation à partir de l'écart entre la durée de l'intervalle séparant deux repères de début de symbole consécutifs du signal de synchronisation et ladite durée de symbole ;
- il comporte un module de compensation de phase relié en entrée audit module de détermination d'une variation de synchronisation et audit module de transformation d'une base temporelle vers une base fréquentielle, afin de compenser, par rotation de phase, ladite variation de synchronisation dans le signal délivré par ledit module de transformation ;
- il est associé à des moyens de paramétrage de la durée d'intervalle de garde et/ou de la durée de symbole ;
- il est adapté pour être mis en oeuvre de manière non continue ; et
- il est adapté pour être mis en oeuvre en continu.

L'invention porte également sur une unité de réception qui comporte un dispositif de synchronisation tel que décrit précédemment.
Suivant d'autres caractéristiques :

- l'unité de réception est adaptée pour la récupération d'un signal, source multiporteuse de télévision numérique transmis par voie hertzienne, modulé par multiplexage orthogonal par division en fréquences.

L'invention sera mieux comprise à la lecture de la description qui va suivre, donnée uniquement à titre d'exemple et faite en se référant aux dessins annexés, sur lesquels :

- la Fig.1A est un organigramme du procédé de l'invention dans le cas d'une modification brutale d'un canal de transmission ;
- la Fig.1B est un chronogramme des signaux tels qu'ils apparaissent en cours de la mise en oeuvre des étapes du procédé tel que décrit en référence à la figure 1A ;
- la Fig.2A est un organigramme d'un mode de réalisation du procédé selon la pratique courante de l'homme du métier ;
- la Fig.2B est un chronogramme des signaux tels qu'ils apparaissent au cours de la mise en oeuvre des étapes du procédé tel que décrit en référence à la figure 2A ;
- la Fig.3A est un organigramme d'un mode de réalisation du procédé de l'invention ;
- la Fig.3B est un chronogramme des signaux tels qu'ils apparaissent au cours de la mise en oeuvre du procédé tel que décrit en référence à la figure 3A ; et
- la Fig.4 est un schéma fonctionnel d'une unité de réception équipée d'un dispositif de synchronisation selon l'invention.

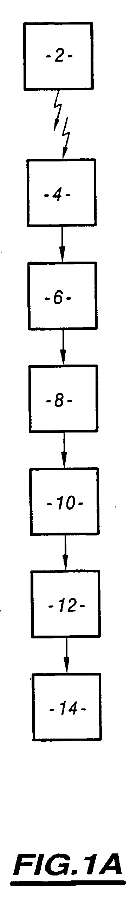

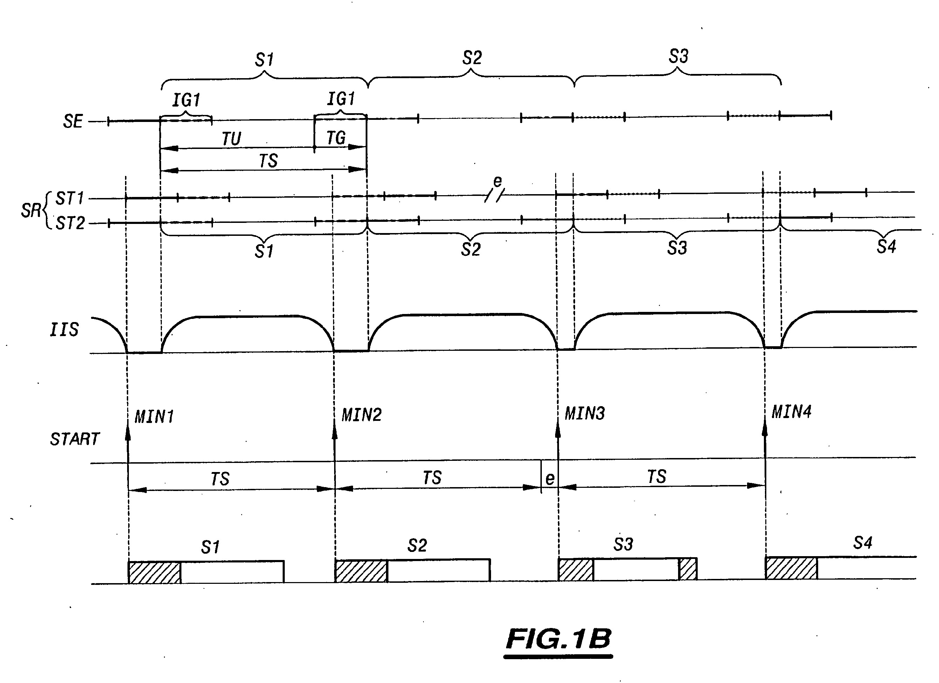

On a représenté sur la figure 1A, un organigramme du procédé de l'invention et sur la figure 1B, un chronogramme des principaux signaux tels qu'ils apparaissent lors des étapes du procédé tel que décrit sur la figure 1A.

Ainsi, lors d'une étape 2 de transmission, un signal source SE est émis par voie hertzienne.

Ce signal source comporte des blocs de données désignés « symboles » tels que les symboles S1 et S2.

Chaque symbole a une durée de symbole TS prédéterminée et fixe et chaque symbole comporte un intervalle de garde IG qui correspond à la répétition, à la fin du symbole, d'un sous-bloc de données du début du symbole.

Ainsi, la durée TS du symbole est divisée en une durée TU de données utiles et une durée TG d'intervalle de garde.

Par exemple, la durée TG de l'intervalle de garde correspond de ¼ à 1/32$^{\text{éme}}$ de la durée TU de données utiles.

Chaque symbole du signal émis SE a la même durée de symbole TS et la même durée d'intervalle de garde TG, de sorte que chaque symbole a également la même durée TU de données utiles.

Lors d'une étape 4 de réception, une pluralité de signaux de transmission tels que les signaux ST1 et ST2, sont reçus et constituent les composantes du signal reçu SR.

Tous les signaux de transmission correspondent au même signal source SE transmis par différents canaux de transmission et sont décalés entre eux d'écarts temporels à priori différents et variables.

Un écart maximal théorique est déterminé par un écart au-delà duquel l'atténuation est considérée comme étant trop importante pour permettre l'exploitation du signal.

Cet écart maximal théorique prédéterminé est fixé en fonction des paramètres du système et la durée TG de l'intervalle de garde est fixée égale ou supérieure à cet écart maximal théorique prédéterminé.

Dans certains cas cependant, des signaux de transmission, avec un écart temporel supérieur à cet écart maximal théorique prédéterminé, peuvent être d'un niveau tel que leur influence n'est pas négligeable.

Avantageusement, un filtrage à la réception permet de ne considérer que les signaux de transmission dans une bande de fréquence donnée. Ce filtrage est obtenu par exemple par une pluralité de filtres analogiques et/ou numériques.

Le signal reçu SR lors de l'étape 4 de réception correspond de fait à l'addition de l'ensemble des signaux de transmission ST1, ST2, après filtrage.

De manière générale, sur le signal reçu SR il apparaît, en raison des écarts temporels à priori différents et variables, une superposition partielle des intervalles de garde entre les composantes résultantes de différents signaux de transmission.

Dans le cas d'un décalage correspondant au décalage maximum théorique entre deux signaux de transmission ST1 et ST2 égal à la durée TG de l'intervalle de garde, dans le signal reçu SR, l'intervalle de garde de chaque symbole est répété deux fois consécutivement.

Ainsi que cela est représenté, on considère que le canal de transmission associé au signal de transmission ST1 subit une modification brutale induisant un temps de parcours plus long d'une durée e au cours de la réception.

Par exemple, cette modification est la conséquence du déplacement de l'antenne de réception d'un récepteur mobile et de l'apparition d'un nouvel écho de réflexion.

Lors d'une étape 6, le signal reçu SR est traité en continu de manière à déterminer un signal IIS représentatif des interférences entre les intervalles de garde des différents signaux de transmission ST1, ST2, désignées « interférences inter-symbole ». Ce signal d'interférences inter-symbole IIS correspond à la représentation de la puissance relative, par symbole, des symboles adjacents.

Sur chaque symbole, il existe donc un unique intervalle au cours duquel les influences des symboles précédents et suivants sont minimums.

Le signal IIS présente donc des plateaux de niveau minimum proche de zéro qui correspondent aux instants de recouvrement entre les intervalles de garde des signaux de transmission ainsi que cela est représenté.

Dans le cas où le décalage entre les signaux de transmission ST1 et ST2 correspond à la durée de TG d'intervalle de garde, ces plateaux sont réduits à des pics.

En outre, dans le cas où ce décalage est supérieur à TG, le signal IIS présente également des pics mais ceux-ci n'atteignent pas la valeur optimale sensiblement égale à zéro.

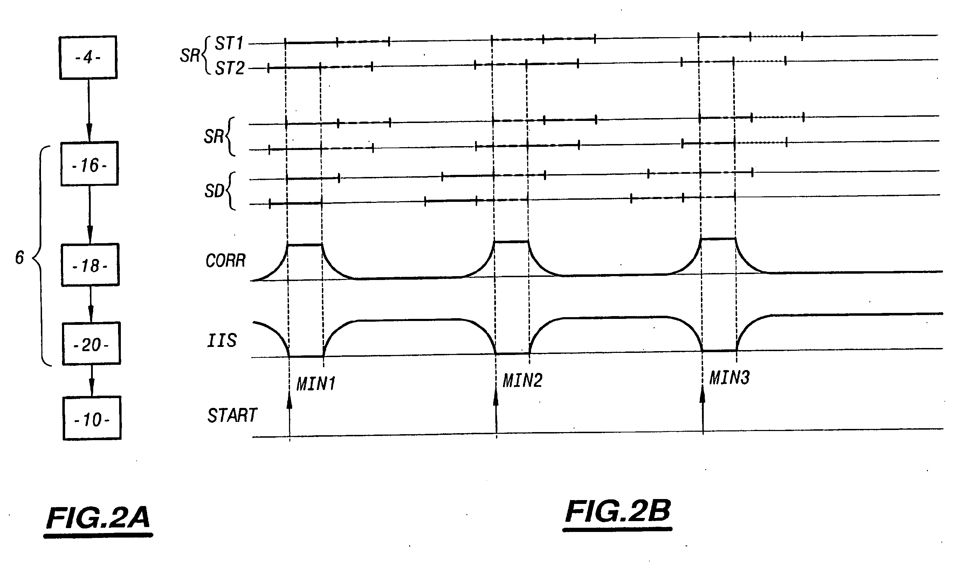

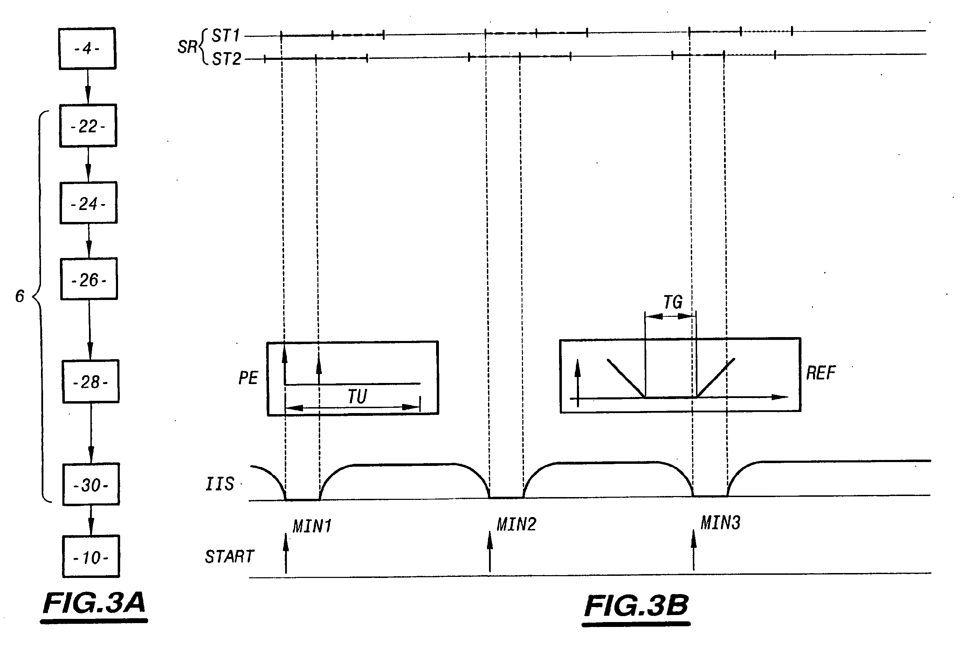

Deux modes de réalisation de l'étape 6 de détermination du signal IIS sont décrits plus en détail en référence aux figures 2A, 2B et 3A, 3B.

Lors d'une étape 10 de détermination en continu d'instants de niveau d'interférences minimum, une pluralité d'instants de niveau d'interférences minimum sont déterminés à partir du signal d'interférences inter-symboles IIS.

Cette étape de détermination débute par une sous-étape de détermination d'un premier instant MIN1 auquel le signal d'interférences IIS atteint un niveau minimum sur un premier intervalle de temps d'une durée égale à la durée de symbole TS.

Ce premier instant de niveau d'interférences minimum MIN1 étant obtenu, une sous-étape de détermination récursive d'un instant auquel le signal d'interférences IIS atteint un niveau minimum sur chaque nouvel intervalle de temps d'une durée égale à la durée de symbole TS et débutant à un instant positionné une demi-durée de symbole TS après l'instant de niveau d'interférences minimum précédent, est entamée.

Ainsi, on obtient :

$$MINi = MIN(IIS), [(MINi-1) + \frac{TS}{2} ; (MINi-1) + \frac{3TS}{2}]$$

Les instants de niveau d'interférences minimum ainsi obtenus, constituent un signal START et permettent de définir des repères de début de symboles.

Il apparaît donc que les instants MIN 2 et MIN3 correspondent aux instants de niveau d'interférences minimum indépendamment de la présence de l'écart e.

Le procédé comporte ensuite, à partir desdits repères de début de symbole et de la durée de symbole TS, une étape de synchronisation en continu au niveau de la réception.

Cette étape de synchronisation correspond par exemple à l'extraction des données contenues dans le signal reçu SR pendant des intervalles de traitement d'une durée prédéterminée dont l'instant de début est fixé par rapport aux repères de début de symbole.

Par exemple, ces intervalles de traitement sont d'une durée égale à la durée de symbole TS et débutent aux repères de début de symbole.

En variante, les intervalles de traitement sont d'une durée égale à la durée de données utiles TU et débutent à des instants décalés par rapport aux repères de début de symboles, d'une durée égale à la durée d'intervalle de garde TG.

Ainsi, le procédé de l'invention permet d'effectuer une synchronisation à la réception en présence de signaux transmis sur des canaux de transmission variables et permet notamment de s'affranchir d'une modification brutale de cancanal.

Par ailleurs, dans le cas décrit, du fait de la modification brutale du canal de transmission du signal de transmission ST1, les instants de corrélation maximum MIN2 et MIN3, sont séparés d'une durée égale à la durée TS de symbole à laquelle se rajoute la durée e induite par la modification du canal de transmission.

De ce fait, le reste du traitement peut être altéré.

Notamment, dans le cas de la transmission par voie hertzienne d'un signal modulé en OFDM, une estimation de la fonction de transfert globale du canal de transmission est calculée à partir des symboles extraits du signal reçu SR.

La présence d'un tel écart e entre deux symboles aboutit à une estimation d'une fonction de transfert globale fausse et une correction erronée en conséquence.

Afin d'éviter de telles erreurs, le procédé comporte, après l'étape 10 de détermination des instants de niveau d'interférences minimum, une étape 12 de calcul en continu du décalage entre deux instants de niveau d'interférences minimum afin de délivrer une mesure de variation de synchronisation égale à l'écart e et également notée e.

Cette mesure e correspond donc à la mesure de l'écart entre la durée de l'intervalle séparant deux instants de corrélation maximum consécutifs et la durée de symbole TS, de sorte que : e = abs [ MINi - MIN(i-1) - TS ]. Cette valeur e est utilisée lors d'une étape 14 de correction en continu.

Par exemple, dans le cadre de la transmission d'un signal modulé sur une pluralité de porteuses ou signal multi-porteuses, une telle correction est obtenue par rotation de phase afin de déplacer une partie des données à l'intérieur du symbole pour reconstituer l'intégralité des données utiles de chaque symbole dans le bon ordre.

Dans l'exemple décrit, le procédé de l'invention est mis en oeuvre en continu, ce qui correspond à une mise en oeuvre pour chaque durée de symbole. Cependant, en variante, il est également possible de le mettre en oeuvre de manière non continue.

Dans ce cas, il peut être répété à des intervalles de temps prédéterminés tels que les variations des canaux de transmission durant ces intervalles de temps peuvent être considérées comme lentes et continues.

L'étape 10 de détermination d'instants de niveau d'interférences minimum est alors réalisée de manière non continue. Notamment les sous-étapes de détermination récursive des instants auxquels le signal d'interférences inter-symbole IIS atteint des niveaux minimums sont réalisées périodiquement dans des intervalles de temps d'une durée égale à la durée de symbole TS et débutant un temps prédéterminé après l'instant de niveau d'interférences minimum précédent.

Par exemple, ce temps prédéterminé correspond à une demi-durée de symbole TS additionnée à un nombre entier de durées de symbole TS.

Si ce nombre entier est nul, cela revient à effectuer la synchronisation en continu pour chaque symbole, sinon le nombre de durées de symbole correspond à la période de la synchronisation.

On a représenté sur la figure 2A, le détail de certaines étapes du procédé selon un mode de réalisation selon la pratique courante de l'homme du métier et sur la figure 2B, un chronogramme des principaux signaux tels qu'ils apparaissent lors des étapes en regard desquels ils sont situés.

Ainsi que cela a été décrit précédemment, le procédé comporte l'étape 4 de réception des signaux de transmission ST1 et ST2, qui sont additionnés afin de constituer le signal reçu SR.

Dans ce mode de réalisation connu, l'étape 6 de détermination du signal IIS représentatif des interférences inter-symboles, comporte une pluralité de sous-étapes et débute par une sous-étape 16, au cours de laquelle le signal reçu SR est retardé en continu d'une durée correspondant à la durée TU de données utiles, soit, à la durée de symbole TS diminuée de la durée TG de l'intervalle de garde.

Le signal délivré à l'issue de cette sous-étape 16 d'application en continu d'un retard, est nommé SD.

Lors d'une sous-étape 18 de calcul, les valeurs de la fonction d'intercorrélation entre le signal reçu SR et le signal retardé SD, sont calculées en continu afin de délivrer le signal d'intercorrélation CORR.

Le retard entre le signal SD et le signal reçu SR étant de la durée TU de données utiles, il apparaît que chaque symbole du signal reçu SR et du signal retardé SD, est superposé à lui-même pendant la durée TG de l'intervalle de garde.

Il apparaît alors entre les signaux SR et SD, un intervalle de temps durant lequel ils sont identiques et donc pendant lequel la valeur du signal d'intercorrélation CORR atteint un niveau maximum sensiblement égal à 1.

Le signal d'intercorrélation CORR présente dont des plateaux de niveau maximum lors des périodes correspondant aux interférences inter-symboles.

Dans le cas où le signal reçu SR correspond à l'addition des deux signaux de transmission décalés de l'écart maximal correspondant à la durée TG de l'intervalle de garde, les maximums de corrélation atteints pendant les interférences inter-symboles correspondent donc à des maximums ponctuels.

De même, dans le cas où le décalage entre les signaux de transmission est supérieur à la durée TG, les maximums de corrélation atteints sont également ponctuels mais atteignent une valeur inférieure à la valeur optimale sensiblement égale à 1.

Avantageusement, le signal d'intercorrélation CORR est calculé par le calcul continu des valeurs de la fonction d'intercorrélation entre le signal retardé SD et le signal reçu SR et par moyennage de ces valeurs sur une fenêtre glissante d'une durée prédéterminée comme par exemple une durée égale à deux fois la durée TG de l'intervalle de garde.

L'étape 6 comporte enfin un sous-étape 20 d'inversion du signal d'intercorrélation CORR afin de délivrer le signal IIS représentatif des interférences inter-symboles à partir duquel est réalisée l'étape 10 de détermination des instants de niveau d'interférences minimum ainsi que cela a été décrit précédemment.

On a représenté sur la figure 3A, certaines étapes du procédé selon un mode de réalisation de l'invention et sur la figure 3B, un chronogramme des principaux signaux tels qu'ils apparaissent au cours des étapes en regard desquels ils sont situés.

Dans ce mode de réalisation du procédé selon l'invention, le signal source SE comporte une pluralité d'informations connues de référence.

De manière classique, dans le cadre de l'application de la transmission par voie hertzienne d'un signal modulé par multiplexage orthogonal par division en fréquence, chaque symbole S comporte une pluralité de porteuses dont certaines sont des porteuses connues de référence désignées « pilotes ».

Typiquement, une porteuse sur douze est une porteuse pilote.

On reconnaît sur les figures 3A et 3B, l'étape 4 de réception du signal reçu SR correspondant à l'addition des signaux de transmission ST1 et ST2.

Dans ce mode de réalisation du procédé selon l'invention, l'étape 6 de détermination du signal IIS représentatif des interférences inter-symboles débute par une sous-étape 22, de transformation du signal reçu SR d'une base temporelle vers une base fréquentielle, sur une fenêtre temporelle glissante d'une durée égale à la durée utile TU soit la durée de symbole TS diminuée de la durée d'intervalle de garde TG.

Typiquement, cette transformation est réalisée à l'aide d'une opération de Transformée de Fourrier Rapide (FFT).

L'étape 6 comporte ensuite une sous-étape 24 d'extraction des pilotes de la représentation fréquentielle du signal reçu SR, réalisée de manière classique.

Par la suite, l'étape 6 comporte une sous-étape 26 de calcul des valeurs de la fonction d'autocorrélation des pilotes extraits afin de déterminer un signal d'autocorrélation des pilotes

Par la suite, ce signal d'autocorrélation des pilotes est utilisé lors d'une sous-étape 28 de transformation d'une base fréquentielle vers une base temporelle afin de déterminer un signal PE représentatif du profil des échos et correspondant à la répartition de l'énergie cumulée des signaux de transmission ST1, ST2 dans la fenêtre temporelle de transformation.

Le signal PE déterminé lors de la sous-étape 28 est utilisé lors d'une sous-étape 30 de calcul des valeurs de la fonction de convolution entre le signal de profil des échos et un signal de référence REF, afin d'obtenir directement le signal IIS représentatif des interférences inter-symboles.

Dans l'exemple décrit, le signal de référence REF est un signal en forme générale trapézoïdale, représentation théorique du niveau d'interférences inter-symboles.

Le signal REF présente un plateau nul d'une durée égale à la durée TG d'intervalle de garde, une pente de -1 avant ce plateau et une pente de +1 après ce plateau.

Bien entendu, d'autres procédés que ceux décrits peuvent être utilisés pour la détermination du signal IIS représentatif des interférences inter-symboles.

Il apparaît donc que le procédé de l'invention permet la synchronisation de la réception du signal reçu au travers de canaux de transmission variables et permet également la correction d'une modification brutale d'un canal de transmission.

Le procédé de l'invention peut être mis en oeuvre par un programme dédié et stocké, par exemple, dans une mémoire non volatile telle qu'une mémoire d'ordinateur ou une mémoire de support amovible telle qu'une carte à puce.

Ce procédé peut également être mis en oeuvre à l'aide de composants programmables tels que par exemple des composants FPGA dont les connexions sont spécialement modifiées de manière à définir une configuration logique dédiée à son exécution.

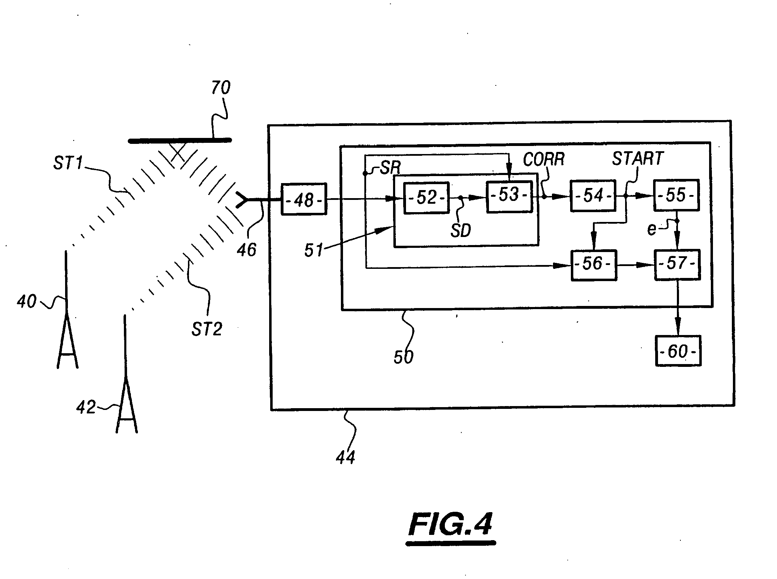

Sur la figure 4, on a représenté un dispositif de synchronisation mettant en oeuvre le procédé tel que décrit en référence aux figures 2A et 2B, dans le cadre de la réception d'un signal de télévision numérique transmis par modulation en multiplexage orthogonal par division en fréquences OFDM ou COFDM.

Sur cette figure, on a représenté deux émetteurs hertziens 40, 42 émettant le même signal source SE à l'intention d'une unité de réception 44.

Cette unité de réception 44 comporte une antenne 46, un module de prétraitement 48, et un dispositif de synchronisation selon l'invention 50.

De manière générale, le dispositif 50 comporte un module 51 de détermination du signal IIS représentatif des interférences inter-symboles.

Dans l'exemple décrit, ce dispositif de synchronisation 50 est adapté pour la mise en oeuvre du mode de réalisation du procédé selon la pratique courante et comporte pour cela, un module d'application de retard 52 relié, en entrée, à la sortie du module 48 de prétraitement et, en sortie, à un module de calcul de corrélation 53.

Le module de calcul de corrélation 53 est également relié en entrée à la sortie du module 48 de prétraitement et est relié en sortie à un module 54 de détermination de repères de début de symbole.

Le module 54 est relié en sortie à un module 55 de détermination d'une valeur de variation de synchronisation.

Le dispositif 50 comprend en outre un module 56 de transformation d'une base temporelle vers une base fréquentielle, relié en entrée, à la sortie du module 48 de prétraitement, ainsi qu'à la sortie du module 54 de détermination de repères de début de symbole.

Ce module 56 de transformation est relié en sortie à un module 57 de compensation de phase, lequel est relié en entrée au module 55 de détermination d'une variation de synchronisation.

La sortie du module 57 est reliée à un module 60 de traitement symbolisant l'ensemble des traitements classiques à effectuer sur le signal reçu.

Ainsi, en fonctionnement, les émetteurs hertziens 40 et 42 émettent le même signal source SE transmis à l'intention de l'antenne 46 par des canaux de transmission différents qui dépendent notamment de l'environnement symbolisé par la référence numérique 70 et se traduisent par la réception des signaux ST1 et ST2 par l'antenne 46 de l'unité de réception 44.

Ces signaux sont par la suite introduits dans le module 48 de prétraitement, qui le met en forme en effectuant une pluralité de traitements, tels qu'une conversion analogique numérique, une transposition en bande de base, un filtrage et une amplification afin de délivrer le signal reçu SR.

Celui-ci est alors introduit dans le module 52 de retard, afin de délivrer le signal SD retardé d'une durée égale à la durée TU de données utiles.

Le module 53 reçoit donc le signal reçu SR ainsi que le signal retardé SD, calcule les valeurs de la fonction d'intercorrélation entre ces signaux et délivre en sortie le signal d'intercorrélation CORR.

Le module 54 reçoit le signal CORR et détermine pour chaque intervalle de temps d'une durée égale à la durée de symbole TS, l'instant auquel le signal d'intercorrélation CORR atteint son niveau maximum.

Ces instants de niveau de corrélation maximum permettent de définir des repères de début de symbole MIN qui sont délivrés sous la forme d'un signal de synchronisation START.

Le module 56 effectue alors une transformation du signal reçu SR d'une base temporelle vers une base fréquentielle telle qu'une transformation de Fourier ou une Transformation de Fourier Rapide (FFT), sur des fenêtres temporelles de durée égale à la durée TU de données utiles et débutant à chaque repère MIN de début de symbole transmis par le signal START.

Simultanément, à partir du signal START, le module 55 de détermination d'une variation de synchronisation, détermine la mesure de variation de synchronisation entre deux repères de début de symbole et délivre un signal e représentatif de cette dernière.

Le module 57 reçoit alors en entrée le signal e ainsi que le signal délivré par le module 56 et, par rotation de phase, compense la variation de synchronisation et délivre les symboles contenus dans le signal reçu.

Par la suite, dans le cadre de la réception d'un signal de télévision numérique, ces symboles servent, dans le module 60, à exécuter un calcul de l'estimation de la fonction de transfert globale du canal de transmission, puis une compensation des variations apportées par la transmission et enfin un décodage et une restitution des informations transmises.

Dans l'exemple décrit, le dispositif de synchronisation 50 fonctionne en continu mais il peut également fonctionner de manière non continue.

Dans ce cas, un fonctionnement optimum requiert la définition de périodes au cours desquelles les variations des canaux de transmission peuvent être considérées comme lentes et continues.

Avantageusement, l'unité 44 de réception comporte, associée au dispositif de synchronisation 50, un module de paramétrage de ce dernier afin de permettre à un utilisateur de paramétrer notamment la durée de symbole TS et la durée d'intervalle de garde TG.

Un dispositif similaire au dispositif décrit peut permettre de mettre en oeuvre le mode de réalisation décrit du procédé de l'invention.

Dans ce cas cependant, une boucle de rétro-action est introduite entre le module 56 de la transformation de Fourrier et le module 50 de détermination du signal IIS.

En outre, dans ce cas, le module 50 comporte d'autres éléments que ceux décrits qu'il est possible de définir par la connaissance du procédé tel que décrit en référence aux figures 3A et 3B.

Il apparaît donc qu'un dispositif selon l'invention permet la synchronisation de la réception d'un signal transmis par des canaux de transmission variables.

Notamment, un tel dispositif est particulièrement adapté pour une unité de réception mobile.

Par exemple, cette unité de réception est intégrée dans un combiné de réception de télévision numérique terrestre, mobile, ou encore de signaux de radio numérique ou des données véhiculées par des signaux multiporteuses.

## Revendications

1. Procédé de synchronisation à la réception d'un signal reçu (SR) obtenu par addition d'une pluralité de signaux de transmission (ST1, ST2), correspondant tous au même signal source (SE) et décalés entre eux d'écarts temporels variables, ledit signal source (SE) comportant des blocs de données désignés « symboles » (S1, S2, S3, S4) d'une durée prédéterminée (TS), chaque symbole (S1, S2, S3, S4) comportant au début et à la fin un même sous-bloc de données désigné « intervalle de garde » (IG), d'une durée prédéterminée (TG) supérieure ou égale à un écart maximal théorique entre lesdits signaux de transmission (ST1, ST2), le procédé comportant :

   - une étape (6) de détermination d'un signal (IIS) représentatif des interférences entre les symboles (S1, S2, S3, S4) des différents signaux de transmission (ST1, ST2) désignées « interférences inter-symboles » ;
   - une étape (10) de détermination d'un instant de niveau d'interférences minimum (MIN), périodiquement pour des intervalles de temps d'une durée égale à ladite durée de symbole (TS), lesquels instants (MIN) correspondent à des repères de début de symboles ; et
   - une étape de synchronisation de la réception dudit signal reçu (SR), à partir desdits repères (MIN) de début de symboles correspondant aux instants de niveau d'interférences minimum et de ladite durée de symboles (TS)-le procédé est **caractérisé en ce que**
   ledit signal reçu comporte une pluralité d'informations connues de référence, désignées « pilotes » et **en ce que** ladite étape (6) de détermination d'un signal (IIS) représentatif des interférences inter-symboles comporte :
   - une sous-étape (22) de transformation dudit signal reçu (SR), d'une base temporelle vers une base fréquentielle sur une fenêtre temporelle d'une durée égale à ladite durée de symbole (TS) diminuée de ladite durée d'intervalle de garde (TG) ;
   - une sous-étape (24) d'extraction desdits pilotes ;
   - une sous-étape (26) de calcul des valeurs de la fonction d'autocorrélation des pilotes afin de délivrer un signal d'autocorrélation des pilotes ;
   - une sous-étape (28) de transformation dudit signal d'autocorrélation des pilotes d'une base fréquentielle vers une base temporelle afin de déterminer un signal (PE) représentatif du profil des échos et correspondant à la répartition de l'énergie cumulée des signaux de transmission (ST1, ST2) dans ladite fenêtre temporelle; et
   - une sous-étape (30) de calcul des valeurs de la fonction de convolution entre le signal (PE) de profil des échos et un signal de référence (REF) pour obtenir directement ledit signal (IIS) représentatif des interférences inter-symboles.

2. Procédé selon la revendication 1, **caractérisé en ce que** ladite étape (10) de détermination périodique d'instants de niveau d'interférences minimum (MIN1, MIN2, MIN3, MIN4) comporte :

   - une sous-étape de détermination de l'instant auquel le signal d'interférences inter-symbole (IIS) atteint un niveau minimum (MIN1) sur un premier intervalle de temps d'une durée égale à la durée de symbole (TS) ;
   - une sous-étape de détermination récursive des instants auxquels le signal d'interférences inter-symbole (IIS) atteint un niveau minimum sur des intervalles de temps d'une durée égale à la durée de symboles (TS) qui débutent un temps prédéterminé après l'instant (MIN) de niveau d'interférences minimum précédent.

3. Procédé selon la revendication 2, **caractérisé en ce que** ledit temps prédéterminé correspond à une demi-durée de symbole (TS), additionné à un nombre entier de durées de symbole (TS).

4. Procédé selon l'une quelconque des revendications 1 à 3, **caractérisé en ce que** ladite étape de synchronisation correspond à l'extraction des données du signal reçu (SR) pendant des intervalles de traitement d'une durée prédéterminée dont l'instant de début est fixé par rapport auxdits repères de début de symbole (MIN).

5. Procédé selon l'une quelconque des revendications 1 à 4, **caractérisé en ce qu'**il comporte après ladite étape (10) de détermination d'instants de niveau d'interférences minimum (MIN), une étape (12) de détermination de l'écart entre la durée de l'intervalle séparant deux instants de niveau d'interférences minimum consécutifs et ladite durée de symbole (TS), afin de délivrer une mesure de variation de synchronisation (e).

6. Procédé selon la revendication 5, **caractérisé en ce qu'**il comporte, après ladite étape (12) de détermination d'une variation de la synchronisation (e), une étape (14) de compensation de cette variation.

7. Procédé selon l'une quelconque des revendications 1 à 6, **caractérisé en ce qu'**il comporte après ladite étape de synchronisation, une étape de transformation du signal reçu (SR) d'une base temporelle vers une base fréquentielle.

8. Procédé selon les revendications 6 et 7 prises ensembles, **caractérisé en ce que** ladite étape (14) de compensation correspond à une étape de rotation de phase de manière à effectuer une permutation circulaire à l'intérieur de chaque symbole (S) d'une quantité de données correspondant à ladite variation de synchronisation (e).

9. Procédé selon l'une quelconque des revendications 1 à 8, **caractérisé en ce que** ledit signal source (SE) est un signal multiporteuse de télévision numérique transmis par voie hertzienne et modulé par multiplexage orthogonal par division de fréquence (OFDM).

10. Procédé selon l'une quelconque des revendications 1 à 9, **caractérisé en ce qu'**il est mis en oeuvre de manière non-continue.

11. Procédé selon l'une quelconque des revendications 1 à 9, **caractérisé en ce qu'**il est mis en oeuvre en continu et **en ce que** ladite étape de détermination d'instants de niveau d'interférences minimum (MIN) est réalisée pour chaque intervalle de temps d'une durée égale à ladite durée de symbole (TS).

12. Programme d'ordinateur, **caractérisé en ce qu'**il comporte des instructions de code de programme pour l'exécution des étapes du procédé selon l'une quelconque des revendications 1 à 11, lorsque ledit programme est exécuté sur un ordinateur.

13. Composant programmé, **caractérisé en ce qu'**il comprend une configuration logique dédiée à l'exécution des étapes du procédé selon l'une quelconque des revendications 1 à 11.

14. Dispositif de synchronisation à la réception d'un signal reçu (SR) obtenu par addition d'une pluralité de signaux de transmission (ST1, ST2), correspondant tous au même signal source (SE) et décalés entre eux d'écarts temporels variables, ledit signal source (SE) comportant des blocs de données désignés « symboles » (S1, S2, S3, S4) d'une durée prédéterminée (TS), chaque symbole (S1, S2, S3, S4) comportant au début et à la fin un même sous-bloc de données désigné « intervalle de garde » (IG), d'une durée prédéterminée (TG) supérieure ou égale à un écart maximal théorique entre lesdits signaux de transmission (ST1, ST2), le dispositif comportant :

   - un module (51) de calcul d'un signal (IIS) représentatif des interférences entre les symboles (S1, S2, S3, S4) des différents signaux de transmission (ST1, ST2) désignées « interférences inter-symboles » ;
   - un module (54) de détermination d'un repère de début de symbole (MIN) périodiquement pour des intervalles de temps d'une durée égale à ladite durée de symbole (TS), par rapport aux instants auxquels le signal d'interférences inter-symbole (IIS) atteint un niveau minimum et correspondant aux instants de niveau d'interférences minimum, afin de délivrer un signal de synchronisation (START) permettant une synchronisation.;
   le dispositif est **caractérisé en ce que** ledit signal reçu comporte une pluralité d'informations connues de référence, désignées « pilotes » et en ce que le dispositif comprend en outre-;

- un module (56) de transformation d'une base temporelle vers une base fréquentielle, recevant en entrée ledit signal reçu (SR) et ledit signal de synchronisation (START) afin de transformer ledit signal reçu (SR) pendant des intervalles de traitement d'une durée prédéterminée dont l'instant de début est déterminé par rapport auxdits repères de début de symbole (MIN) contenus dans ledit signal de synchronisation (STAR) ;
- un module d'extraction desdits pilotes ;
- un module de calcul des valeurs de la fonction d'autocorrélation des pilotes afin de délivrer un signal d'autocorrélation des pilotes ;
- un module de transformation dudit signal d'autocorrélation des pilotes d'une base fréquentielle vers une base temporelle afin de déterminer un signal (PE) représentatif du profil des échos et correspondant à la répartition de l'énergie cumulée des signaux de transmission (ST1, ST2) dans ladite fenêtre temporelle ; et
- un module de calcul des valeurs dé la fonction de convolution entre le signal (PE) de profil des échos et un signal de référence (REF) pour obtenir directement ledit signal (IIS) représentatif des interférences inter-symboles.

**15.** Dispositif selon la revendication 14, **caractérisé en ce qu'**il comprend en outre un module (54) de détermination d'une valeur de variation de synchronisation (e) à partir de l'écart entre la durée de l'intervalle séparant deux repères de début de symbole consécutif du signal de synchronisation (START) et ladite durée de symbole (TS).

**16.** Dispositif selon les revendications 14 et 15 prises ensembles, **caractérisé en ce qu'**il comporte un module (57) de compensation de phase relié en entrée audit module (54) de détermination d'une variation de synchronisation et audit module (56) de transformation d'une base temporelle vers une base fréquentielle, afin de compenser, par rotation de phase, ladite variation de synchronisation (e) dans le signal délivré par ledit module (56) de transformation.

**17.** Dispositif selon l'une quelconque des revendications 14 à 16, **caractérisé en ce qu'**il est associé à des moyens de paramétrage de la durée d'intervalle de garde (TG) et/ou de la durée de symbole (TS).

**18.** Dispositif selon l'une quelconque des revendications 14 à 17, **caractérisé en ce qu'**il est adapté pour être mis en oeuvre de manière non-continue.

**19.** Dispositif selon l'une quelconque des revendications 14 à 17, **caractérisé en ce qu'**il est adapté pour être mis en oeuvre en continu.

**20.** Unité de réception d'un signal hertzien, **caractérisé en ce qu'**elle comporte un dispositif de synchronisation selon l'une quelconque des revendications 14 à 19 et **en ce qu'**elle est adaptée pour la réception d'un signal, source (SE) multiporteuse de télévision numérique transmis par voie hertzienne, modulé par multiplexage orthogonal par division en fréquences (OFDM).

**Claims**

**1.** A process for the synchronisation upon reception of a received signal (SR) obtained by the addition of a plurality of transmission signals (ST1, ST2) all corresponding to the same source signal (SE) and offset from each other by variable time offsets, the said source signal (SE) comprising blocks of data referred to as "symbol" (S1, S2, S3, S4) of predetermined duration (TS), each symbol (S1, S2, S3, S4) comprising at the start and end a same sub-block of data referred to as a "guard interval" (IG) of predetermined duration (TG) which is greater than or equal to a maximum theoretical offset between the said transmission signals (ST1, ST2), the process comprising ;

- a stage (6) of determining a signal (IIS) representing interference between the symbols (S1, S2, S3, S4) of the different transmission signals (ST1, ST2) referred to as "inter-symbol interference";
- a stage (10) in which a time of minimum interferences level (MIN) is determined periodically for time intervals of a length equal to the said symbol time (TS), these times (NIN) corresponding to symbol start references; and
- a stage of synchronising reception of the said received signal (SR) from the said symbol start references (MIN) corresponding to the times of minimum interference level and the said symbol time (TS);the process being **characterised in that** the said received signal comprises a plurality of know reference information referred to as "pilots" and **in that** the said stage (6) of determining a signal (IIS) representing inter-syaibol interference comprises;
- a substage (22) of transformation of the said received signal (SR) from a time base to a frequency base over a time window of a duration equal to the said symbol time (TS) less the said guard interval time (TG);

- a substage (24) for extraction of the said pilots;
- a substage (26) for calculating values of the autocorrelation function for the plots in order to produce a pilot autocorrelation signal;
- a substage (28) of transformation of the said pilot autocorrelation signal from a frequency base to a time base in order to produce a signal. (PE) representing the echo profile and corresponding to the distribution of the cumulative energy of the transmission signals (ST1, ST2) within the said time window; and
- a substage (30) for calculating the values of the convolution function between the echo profile signal (PE) and a reference signal (REF) in order to obtain the said signal (IIS) representing inter-symbol interference directly.

2. A process according to claim 1, **characterised in that** the said stage (10) of periodically determining minimum interference level times (MINI, MIN2, MIN3, MIN4) comprises:

a substage determining the time when the inter-symbol interference signal (IIS) reaches a minimum level (MINI) in a first time interval of length equal to the symbol time (TS);

a substage of recursive determination of the times at which the inter- symbol interference signal (IIS) reaches a minimum level during time intervals of length equal to the symbol time (TS) which start a predetermined time after the time (MIN) of the preceding minimum interference level.

3. A process according to claim 2, **characterised in that** the said predetermined time corresponds to a half symbol time (TS) added to a whole number of symbol times (TS).

4. A process according to any one of claims 1. to 3, **characterised in that** the said synchronisation stage corresponds to extraction of the data from the received signal (SR) during processing times of predetermined length the starting time of which is fixed in relation to the said symbol start references (MIN).

5. A process according to any one of claims 1 to 4, **characterised in that** that after the said stage (10) of determining minimum interference level times (MIN) it comprises a stage (12) for determining the offset between the interval time separating two consecutive minimum interference level times and the said symbol time (TS) in order to produce a measurement of the variation in synchronisation (e) .

6. A process according to claim 5, **characterised in that** after the said stage (12) of determining a variation in synchronisation (e) it comprises a stage (14) of compensating for this variation.

7. A process according to any one of claims 1 to 6, **characterised in that** after the said synchronisation stage it comprises a stage of transformation of the received signal (SR) from a time base to a frequency base.

8. A process according to claims 6 and 7 taken together, **characterised in that** the said compensation stage (14) corresponds to a phase rotation stage so as to perform a circular permutation within each symbol (S) of a quantity of data corresponding to the said synchronisation variation (e) .

9. A process according to any one of claims 1 to 8, **characterised in that** the said source signal (SE) is a digital television multicarrier signal transmitted by radio means and modulated by orthogonal frequency division multiplexing (OFDM).

10. A process according to any one of claims 1 to 9, **characterised in that** it is operated in a discontinuous way.

11. A process according to any one of claims 1 to 9, **characterised in that** it is operated continuously and that the said stage of determining minimum interference level times (MIN) is carried out for each time interval of a length equal to the said symbol time (TS).

12. A computer program, **characterised in that** it comprises program code instructions for carrying out the stages of the process according to any one of claims 1 to 11 when the said program is carried out on a computer.

13. A programmed component, **characterised in that** it comprises a logical configuration dedicated to carrying out the stages and the process according to any one of claims 1 to 11.

14. A device for synchronisation upon reception of a received signal (SR) obtained by the addition of a plurality of transmission signals (ST1, ST2) all corresponding to the same source signal (SE) and offset from each other by variable time offsets, the said source signal (SE) comprising data blocks referred to as "symbols" (S1, S2, S3, S4) of predetermined duration (TS), each symbol (S1, S2, S3, S4) comprising at the beginning and at the end a same sub-block of data referred to as a "guard interval" (IG) of predetermined duration (TG) which is greater than or equal to a maximum theoretical offset between the said transmission signals (ST1, ST2), the device comprising:

- a module (51) for calculating a signal (IIS) representing interference between the symbols (S1, S2, S3, S4) in the different transmission signals (ST1, ST2) referred to as "inter-symbol interference";
- a module (54) for determining a symbol start reference (MIN) periodically for time intervals of a length equal to the said symbol time (TS) in relation to the times at which the inter-symbol interference signal (IIS) reaches a minimum level and corresponding to the minimum interference level times in order to produce a synchronisation signal (START) which makes synchronisation possible;
the device being **characterised in that** said received signal comprises a plurality of known reference information referred to as "pilots" and **in that** it also comprises:
- a module (56) for transformation from a time base to a frequency base receiving as an input the said received signal (SR) and the said synchronisation signal (START) in order to transform the said received signal (SR) during processing intervals of a predetermined length the start time of which is determined in relation to the said symbol start references (MIN) included in the said synchronisation signal (START);
- a module for extraction of the said pilots;
- a module for calculating values of the autocorrelation function for the pilots in order to produce a pilot autocorrelation signal;
- a module of transformation of the said pilot autocorrelation signal from a frequency base to a time base in order to produce a signal (PE) representing the echo profile and corresponding to the distribution of the cumulative energy of the transmission signals (ST1, ST2) within the said time window; and
- a module for calculating the values of the convolution function between the echo profile signal (PE) and a reference signal (REF) in order to obtain the said signal (IIS) representing inter-symbol interference directly.

15. A device according to claim 14, **characterised in that** it also comprises a module (54) for determining a synchronisation variation value (e) from the offset between the time interval separating two consecutive symbol start references or the synchronisation signal (START) and the said symbol time (TS).

16. A device according to claims 14 and 15 taken together, **characterised in that** it comprises a phase compensation module (57) connected as an imput to the said module (54) for determining synchronisation variation and to the module (56) transforming a time basis to a frequency basis in order to compensate for the said synchronisation variation (e) in the signal delivered by the said transformation module (56) through phase rotation.

17. A device according to any one of claims 14 to 16, **characterised in that** it is associated witch means for parametering the guard interval time (TG) and/or the symbol time (TS).

18. A device according to any one of claims 14 to 17, **characterised in that** it is designed to be operated discontinuously.

19. A device according to any one of claims 14 to 17, **characterised in that** it is designed to be operated continuously.

20. A unit for the reception of a radio signal, **characterised in that** it comprises a synchronisation device according to any of claims 14 to 19 and **in that** it is designed for the reception of a digital television multicarrier source signal (SE) transmitted by radio means, modulated by orthogonal frequency division multiplexing (OFDM).

**Patentansprüche**

1. Verfahren zur Synchronisation beim Empfang eines empfangenden Signals (SR), das durch Addition einer Vielzahl von Sendesignalen (ST1, ST2) erhalten wird, die alle einem selben Quellensignal (SE) entsprechen und zueinander um variable zeitliche Abstände versetzt sind, wobei das Quellensignal (SE) als "Symbole" (S1-, S2, S3, S4) bezeichnete Datenblöcke einer vorbestimmten Dauer (TS) umfasst, und jedes Symbol (S1, S2, S3, S4) am Anfang und am Ende einen selben, als "Schutzintervall" (IG) bezeichneten Datensubblock einer vorbestimmten Dauer (TG) größer oder gleich einem theoretischen maximalen Abstand zwischen den Sendesignalen (ST1, ST2) aufweist, wobei das Verfahren umfasst:

einen Schritt (6) der Bestimmung eines Signals (IIS), das für als "Intersymbol-Interferenzen" bezeichnete Interferenzen zwisehnen den Symbolen (S1, S2, S3, S4) der unterschiedlichen Sendesignale (ST1, ST2) repräsentativ ist,

einen Schritt (10) der Bestimmung eines Moments (MIN) mit minimalem Interferenzniveau periodisch für Zeitintervalle einer Dauer gleich der Symboldauer (TS), wobei die Momente (MIN) Marken für den Symbolbeginn entsprechen; und

einen Schritt der Synchronisation des Empfangs des empfangenen Signals (SR) aus den Marken (MIN) des Symbolbeginns entsprechend den Momenten des minimalen Interferenzniveaus und der Symboldauer (TS), wobei das Verfahren **dadurch gekennzeichnet ist, dass** das empfangene Signal eine Vielzahl von bekonnten, als "Pilotsignale" bezeichneten Referenzinformationen umfasst und dass der Schritt (6) des Bestimmens eines für die Intersymbol-Interferenzen repräsentativen Signals (IIS) umfasst:

einen Unterschritt (22) des Transformierens des empfangenen Signals (SR) von einer Zeitbasis in eine Frequenzbasis über ein Zeitfenster einer Dauer gleich der Symboldauer (TS), verringert um die Dauer des Schutzintervalls (TG) ;

einen Unterschritt (24) des Extrahierens der Pilotsignale;

einen Unterschritt (26) der Berechnung von Werten der Autokorrelationsfunktion der Pilotsignale, um ein Autokorrelationssignal der Pilotsignale za liefern;

einen Unterschritt (28) der Transformation des Autokorrelationssignals der Pilotsignale von einer Frequenzbasis in eine Zeitbasis, um ein Signal (PE) zu bestimmen, das für das Profil der Echos repräsentativ ist und der Verteilung der kumulierten Energie der Sendesignale (ST1, ST2) in dem Zeitfenster entspricht; und

- einen Unterschritt (30) der Berechnung von Werten der Faltungsfunktion zwischen dem Signal (PE) des Profils der Echos und einem Referenzsiynal (REF), um direkt das für die intersyrnbol-Interferenzen repräsentative Signal (IIS) zu erhalten.

2. verfahren nach Anspruch 1, **dadurch gekennzeichnet, dass** der Schritt (10) der periodischen Bestimmung der Momente (MIN1, MIN2, MIN3, MIN4) mit minimalem Interferenzniveau umfasst :

- einen Unterschritt der Bestimmung des Moments, bei dem das Signal (IIS) der Intersymbol-Interferenzen ein minimales Niveau (MINI) in einem ersten zeitintervall einer Dauer gleich der symbol dauer (TS) erreicht;
- einen Unterschritt der rekursiven Bestimmung von Momenten, bei denen. das Signal (IIS) der Inter-Symbol-Interferenzen ein minimales Niveau in Zeitintervallen einer Dauer gleich der Symboldauer (TS) erreicht, die zu einer vorbestimmten Zeit nach dem vorhergehenden Moment (MIN) des minimalen Interferenzniveaus beginnen.

3. Verfahren nach Anspruch 2, **dadurch gekennzeichnet, dass** die vorbestimmte Zeit einer Symbolhalbdauer (TS) entspricht, addiert mit einer ganzen Zahl der Symboldauern (TS) .

4. verfahren nach einem beliebigen der Ansprüche 1 bis 3, **dadurch gekennzeichnet, dass** der Schritt der Synchronisation einer Extraktion der Daten des empfangenen Signals (SR) während Befandlungsintervallen einer vorbestimmten Dauer, deren Moment des Beginns in Bezug auf die Marken des Symbolbeginns (MIN) fest ist, entspricht.

5. Verfahren nach einem beliebigen der Ansprüche 1 bis 4, **dadurch gekennzeichnet, dass** es nach dem Schritt (10) der Bestimmung von Momenten des minimalen Interferenzniveaus (MIN) einen Schritt (12) der Bestimmung des Abstands zwischen der Dauer des Intervalls, das zwei aufeinanderfolgende Momente mit minimalem Interferenzniveau trennt, und der Symboldauer (TS), um ein Maß für die Änderung der Synchronisation (e) zu liefern, umfasst.

6. Verfahren nach Anspruch 5, **dadurch gekennzeichnet, dass** es nach dem Schritt (12) der Bestimmung einer Änderung der Synchronisation (e) einen Schritt (14) der Kompensation dieser Änderung umfasst.

7. Verfahren nach einem beliebigen der Ansprüche 1 bis 6, **dadurch gekennzeichnet, dass** es nach dem Schritt der Synchronisation einen Schritt der Transformation des empfangenen Signals (SR) von einer Zeitbasis in eine Frequenzbasis umfasst.

8. Verfahren nach Anspruch 6 und 7, zusammengenommen, **dadurch gekennzeichnet, dass** der Schritt (14) der Kompensation einem Schritt der Phasendrehung entspricht, um eine zirkulare Permutation im Inneren jedes Symbols (S) einer Anzahl von Daten entsprechend der Änderung der Synchronisation (e) durchzuführen.

9. Verfahren nach einem beliebigen der Ansprüche bis 8, **dadurch gekennzeichnet, dass** das Quellensignal (SE) ein digitales Mehrträger-Fernsehsignal ist, das auf dem Funkwege übertragen wird und durch das ortnogonale Frequenzmultiplexverfahren (OFDM) moduliert wird.

10. Verfahren nach einem beliebigen der Ansprüche 1 bis 9, **dadurch gekennzeichnet, dass** es in nicht kontinuierlicher Weise durchgeführt wird.

11. Verfahren nach einem beliebigen der Ansprüche 1 bis 9, **dadurch gekennzeichnet, dass** es kontinuierlich durchgeführt wird und dass der Schritt der Bestimmung von Momenten mit minimalem Interferenzniveau (MIN) für jedes Zeitintervall einer Dauer gleich der Symboldauer (TS) durchgeführt wird.

12. Rechnerprogramm, **dadurch gekennzeichnet, dass** es Programmcodebefehle für die Ausführung der Schritte des Verfahrens nach einem beliebigen der Ansprüche 1 bis 11 umfasst, wenn das Programm auf einem Rechner ausgeführt: wird,

13. Programmierte Komponente, **dadurch gekennzeichnet, dass** sie eine logische Konfiguration umfasst, die der Ausführung der Schritte des verfahrens nach einem beliebigen der Ansprüche 1 bis 11 zugeordnet ist.

14. Vorrichtung zur Synchronisation beim Empfang eines empfangenen Signals (SR) , das durch Addition einer Vielzahl von Sendesignalen (ST1, ST2) erhalten wird, die alle einem selben Quellensignal (SE) entsprechen und zueinander um variable zeitliche Abstände versetzt sind, wobei das Quellensignal (SE) als "Symbole" (S1, S2, S3, S4) bezeichnete Datenblöcke einer vorbestimmten Dauer (TS) umfasst, und jedes Symbol (S1, S2, S3, S4) am Anfang und am Ende einen selben, als "Schutzintervall" (IG) bezeichnete Datensubblock einer vorbestimmten Dauer (TG) großer oder gleich einem theoretischen maximalen Abstand zwischen den Sendesignalen (ST1, ST2) aufweist, wobei die Vorrichtung umfasst:

ein Modul. (51) zur Berechnung eines Signals (IIS), das für als "Intersymbol-Interferenzen" (S1, S2, S3, S4) bezeichnete Interferenzen der unterschiedlichen Sendesignale (ST1, ST2) repräsentativ ist;
ein Modul (54) zur Bestimmung einer Marke für den Symbolbeginn (MIN), periodisch für Zei.t-intervalle einer Dauer gleich der Symboldauer (TS), in Bezug auf Momente, bei denen das Signal (IIS) der Intersymbot-Interferenzen ein minimales Niveau erreicht und den Momenten des minimalen Interferenzniveaus entspricht, um ein Synchronisationssignal (START) zu liefern, das eine Synchronisation ermöglicht;
- wobei die Vorrichtung **dadurch gekennzeichnet ist, dass** das empfangene Signal eine Vielzahl von bekannten Referenzinformationen, genannt "Pilotsignale" umfasst, und dass die Vorrichtung weiterhin umfasst:
- ein Modul (56) zur Transformation von einer Zeitbasis in eine Frequenzbasis, das am Eingang das empfangene Signal (SR) und das Synchronisationesignal (START) erhält, um das empfangene Signal (SR) während Behandlungsintervailen einer vorbestimmten Dauer zu transformieren, deren Moment des Beginns in Bezug auf die Marken des Symbolbeginns (MIN) bestimmt, ist, die in dem Synchronisationssignal (START) enthalten sind;
ein Modul zur Extraktion der Pilotsignale;
ein Modul zur Berechnung von Werten der Autokorrelationsfunktíon der Pilotsignale, um ein Autokorrelationssignal der Pilotsignale zu liefern;
ein Modul zur Transformation des Autokorrelationssignals der Pilotsignale von einer Frequenzbasis in eine Zeitbasis, um ein Signal (PE) zu bestimmen, das repräsentativ für das Profil der Echos ist und der Verteilung der kumulierten Energie der Sendesignale (ST1, ST2) in dem Zeitfenster entspricht ; und
ein Modul zur Berechnung der Werte der Faltungsfunktion zwischen dem Signal (PE) des Profils der Echos und einem Referenzsi-gnal (REF), um direkt das Signal (IIS) zu erhalten, das repräsentativ für die Intersymbol-Interferenzen ist.

15. Vorrichtung nach Anspruch 14, **dadurch gekennzeichnet, dass** sie darüber hinaus ein Modul (54) zur Bestimmung eines Werts der Änderung der Synchronisation (e) aus dem Abstand zwischen der Dauer des Intervalls, das zwei aufeinander folgende Marken des Symbolbeginns des Synchronisationssignals (START) trennt, und der Symboldauer (TS), umfasst.

16. Vorrichtung nach den Ansprüchen 14 und 15 zusammen genommen, **dadurch gekennzeichnet, dass** sie ein Modul (57) zur Phasenkompensation aufweist, das eingangsseitig mit dem Modul (54) zur Bestimmung eines Werts der Änderung der Synchronisation und dem Modul (56) zur Transformation von einer Zeitbasis in eine Frequenzbasis verbunden ist, um durch Phasenrotation die Änderung der Synchronisation (e) in dem von dem Modul (56) zur Transformation gelieferte Signal zu kompensieren.

17. Vorrichtung nach einem beliebigen der Ansprüche 14 bis 16, **dadurch gekennzeichnet, dass** sie Mitteln zur Parametriaierung der Dauer des Schutzintervalls (TG) und/oder der Symboldauer (TS) zugeordnet ist.

**18.** Vorrichtung nach einem beliebigen der Ansprüche 14 bis 17, **dadurch gekennzeichnet, dass** sie angepasst ist, in nicht kontinuierlicher Weise umgesetzt zu werden.

**19.** Vorrichtung nach einem beliebigen der Ansprüche 14 bis 17, dadurch gekenntzeichnet, dass sie angepasst ist, in kontinuierlicher Weise umgesetzt zu werden.

**20.** Einheit zum Empfang eines Funksignals, **dadurch gekennzeichnet, dass** aie ein Vorrichtung zur Synchronisation nach einem beliebigen der Ansprüche 14 bis 19 aufweist und dass sie gangepasst ist, ein digitales Mchrträger-Fernseh-Quellensignal (SE) zu empfangen, das auf dem Funkwege übertragen wird und durch das orthogonale Frequenzmultiplexverfahren. (OFDM) moduliert ist.

**_FIG.1A_**

**FIG.1B**

EP 1 508 233 B1

**FIG.2A**

**FIG.2B**

FIG.3B

FIG.3A

20

*FIG.4*

**EP 1 508 233 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2370155 A